# EUROPEAN PATENT APPLICATION

(11) **EP 1 407 672 A1**
(43) Date of publication of application: **14.04.2004**
(21) Application number: 02425607.5
(22) Date of filing: 08.10.2002
(51) Int. Cl.: A23B 7/154, A23B 7/157, A23B 7/08

(54) **Method for the conservation of fruit after the cut**

(71) Applicant: Delizie Di Frutta S.r.l., Salerno (IT)
(72) Inventor: Dimeo, Vincenzo, San Cipriano Vicentino, 84090 Salerno (IT)
(74) Representative: Sabelli, Aldo

(57) **Abstract**

The method allows to conserve for 5 - 10 days fruit after the cut, without any tangible chemical - physical - microbiological or organoleptic alteration or modification.

The conservation is entrusted to a treatment similar to an osmotic process of molecular exchange, that controls the related oxidation processes.

There are no limitations on the treated species, whereas it is sufficient the respect of the qualitative parameters set for top-quality goods.

The block of the oxidation processes is due to the immersion of fruit in a watery solution composed by two components:
Component A: Sugar (Saccharose C12H22O11) with concentration in weight comprised between 100 and 185 g/l
Component B: Salt (Sodium Chloride NaCl) with concentration in weight comprised between 0,6 and 2,5 g/l

Fruit and solution are placed in an intimate contact, for a time comprised between 3 and 20 minutes and maintained at a temperature comprised between 5 and 20 °C; in this period exchanges between the fruit and the solution take place until the attainment of an equilibrium that renders the fruit stable.

## Description

The range of the invention is the field of production of foods for human consumption, finished products, better defined as forth range products.

The various techniques used so far for conservation of fruit after the cut are all aimed at blocking oxidation processes using additive chemicals, such as: citric or salicylic acids, complexing like EDTA etc., dehydrators like calcium sulphate etc.

The invention instead provides for the block of oxidation processes using a watery solution composed by sugar and salt; sugar is composed by saccharose that in water, by neutral hydrolysis, splits into fructose and glucose, that are simple sugars naturally present in fruit.

The cut causes the breach of cells with slow emission of the cell liquid, that oxidizes because of the contact with oxygen of air, conferring to fruit the typical brown coloration.

The oxidation process advances at different speed depending on species of fruit, and it is not interrupted until the complete exhaustion of oxidizable substances.

This new method eliminates the cell liquid after the cut or the damage, as it is solubilized into the watery solution composed by sugar and salt.

The process takes place because of the contemporary presence of two zones into contact (fruit - solution) at different elementary concentrations; whereas sodium chloride activates and accelerates the exchange, as well as lightly dehydrates cell membrane that is under the damaged one, conferring to it a greater rigidity and therefore durable stability.

Since the oxidation processes activate instantaneously, fruit immediately after the cut are dipped in the watery solution and maintained in constant agitation, until the attainment of an equilibrium that renders the fruit stable. After the abovementioned stabilization treatment, fruit are drained and dried in a current of air at a temperature comprised between 5 and 25°C. Such phase allows the removal of the exceeding water by evaporation, together with a deposit of a non crystallized fructose film around the fruit, that makes fruit better preservable.

The principal innovation of the present method is the technique of approach to the problem, focused (based) not more on blocking the oxidation processes by inhibition, but on removal of all the oxidizable substances, together with the use of substances already present in the fruit that guarantee to have a natural and genuine product.

Further qualities of the method are: the conservation of fragrance, colour and natural taste of fresh fruit; the full durable maintenance of the protein content: a light reduction of the caloric value and the acid components; an increase of the softness.

The product obtained by the new method can be consumed alone at a fresh state or together with other elements (chocolate, yoghurt, creams, ice creams), or it can be transformed and used in whichever field of gastronomy.

## Claims

1. A Method for conservation of fruit after cut that allows to conserve fresh fruit for 5-10 days after the cut, **characterized in that** there is no tangible chemical - physical - microbiological or organoleptic alteration or modification.

2. A Method for conservation of fruit after cut as claimed in claim 1 **characterized in that** it is similar to an osmotic process of molecular exchange, that blocks the oxidation processes that normally occurred after the cut of fruit.

3. A Method for conservation of fruit after cut as claimed in claim 1 and 2 **characterized by** the immersion of fruit in a watery solution composed of Sugar (Saccharose C12H22O11) and Salt (Sodium Chloride NaCl).

4. A Method for conservation of fruit after cut as claimed in claim 1, 2 and 3 **characterized in that** Sugar (Saccharose C12H22O11) is used with concentration in weight comprised between 100 and 185 g/l, whereas Salt (Sodium Chloride NaCl) is used with concentration in weight comprised between 0,6 and 2,5 g/l.

5. A Method for conservation of fruit after cut as claimed in claim 1, 2, 3 and 4 **characterized in that** the immersion of fruit in the watery solution takes place for a time comprised between 3 and 20 minutes.

6. A Method for conservation of fruit after cut as claimed in claim 1, 2, 3, 4 e 5 **characterized in that** during the immersion of fruit in the watery solution the temperature is maintained between 5 and 20 °C.

7. A Method for conservation of fruit after cut as claimed in claim 1, 2, 3, 4, 5 and 6 **characterized in that** there are no limitations on the treated species, whereas it is sufficient to choose them in respect of the qualitative parameters set for top-quality goods.
